# EUROPEAN PATENT APPLICATION

(11) **EP 4 525 246 A1**
(43) Date of publication of application: **19.03.2025**
(21) Application number: 23197149.0
(22) Date of filing: 13.09.2023
(51) Int. Cl.: H02J 3/00, H02J 3/32, H02J 7/00, H02J 7/02

(54) **ENERGY STORAGE SYSTEM FOR CONNECTION TO AN AC GRID**

(71) Applicant: Hitachi Energy Ltd, 8050 Zürich (CH)
(72) Inventor: Bai, Haofeng, 723 48 Västerås (SE); Chou, Shih-Feng, 72342 Västerås (SE); Viatkin, Aleksandr, 72338 Västerås (SE); Khan, Akif Zia, 31-416 Krakow (PL); Zhang, Hongyang, 11524 Stockholm (SE); Svensson, Jan, 72346 Västerås (SE)
(74) Representative: AWA Sweden AB

(57) **Abstract**

There is disclosed herein an energy storage system (1) for connection to an alternating current, AC, grid (2). The energy storage system comprises a first converter (10) configured to connect the AC grid to a first terminal (3) and a second terminal (4). The energy storage system further comprises a plurality of energy storage strings (20) connected in parallel to the first converter and in parallel to each other between the first terminal and the second terminal. Each of said plurality of energy storage strings comprises a plurality of energy storage units (22) connected in series with each other. The energy storage system further comprises at least one second AC/DC converter module (30) connected in series to said plurality of energy storage strings and configured to receive AC power from an AC source being an infeed from said AC grid or another AC source (6).

## Description

### Technical field

The present disclosure generally relates to an energy storage system for connection to an alternating current, AC, grid.

### Background

With the rise of renewable energy sources, such as solar power and wind power, there is an increase of intermittency and fluctuations in the power grid. Grid-connected energy storage system addresses the challenges of intermittency and fluctuations caused by the renewable energy sources. Grid-connected energy storage systems can store energy when there is excess of energy in the power grid and provide energy when there is a deficit of energy in the power grid.

The energy storage elements in the energy storage system may be connected in series and/or in parallel to reach the requirement on voltage and current of the system. A power conversion system is often used to connect the energy storage elements to an alternating current, AC, grid. This allows for a direct connection between the energy storage elements and the AC grid. However, such direct connection does not allow the energy storage system to balance the current distribution among the energy storage elements.

Some prior art systems may allow for a flexible operation of the energy storage elements by connecting each energy storage element to a direct current/direct current, DC/DC, converter and thereafter a power conversion system is used to connect the energy storage elements to the AC grid. This achieves that the voltage and current input/output to/from the energy storage elements may be controlled. However, this results in a complex and expensive system with high losses. Therefore, there is still a need of improved grid-connected energy storage systems.

### Summary

It is therefore an object of the present disclosure to provide an energy storage system for connection to an alternating current, AC grid that alleviates at least part of the above-mentioned drawbacks. It is for example an object of the present disclosure to provide an energy storage system with lower complexity, that allows for balancing of the energy storage elements, and/or which is less expensive.

According to a first aspect of the present disclosure, an energy storage system for connection to an AC grid is provided. The energy storage system comprises a first converter configured to connect the AC grid to a first terminal and a second terminal. The first converter comprises an upper arm and a lower arm for each phase of the AC grid. The upper arm is connected to the first terminal and the lower arm is connected to the second terminal and each arm comprises a plurality of converter cells. The energy storage system further comprises a plurality of energy storage strings connected in parallel to the first converter and in parallel to each other between the first terminal and the second terminal. Each of said plurality of energy storage strings comprises a plurality of energy storage units connected in series with each other. The energy storage system further comprises at least one second AC/DC converter module connected in series to said plurality of energy storage strings and configured to receive AC power from an AC source being an infeed from the AC grid or another AC source.

With the increasing amount of renewable energy sources in the AC grid, support functions to the AC grid plays a bigger role. With said plurality of energy storage strings connected in parallel and said plurality of energy storage units connected in series at each energy storage string, the voltage and the current provided by the energy storage system can be controlled. For example, adding more energy storage strings may achieve a higher current and adding more energy storage units may achieve a higher voltage. Further, an energy storage unit of the energy storage string may include several energy storage units (or elements) connected in parallel. For example, an energy storage unit of the energy storage string may be supplemented by one or more additional energy storage elements connected in parallel to the energy storage unit. The energy storage system may for example provide energy when there is a deficit of power in the AC grid.

The arrangement of the second AC/DC converter module in series to the plurality of energy storage strings such that the second AC/DC converter module is connected to either one of the AC grid and the AC source, or both of the AC grid and the AC source, is beneficial in that the second AC/DC converter module may receive AC power to recharge the energy storage units of the energy storage strings, thereby avoiding that the energy storage units are replaced when the stored energy has been provided to the AC grid. As mentioned above, the AC power received by the at least one second AC/DC converter module for recharging the energy storage units of the energy storage system may originate from the AC grid, for example in case of surplus of power in the AC grid, or another AC source (e.g., a renewable energy source). The energy storage system may therefore be charged even if there is a deficit of power in the AC grid.

As an example, the at least one second AC/DC converter module may include one or more AC/DC converters which may include diodes, thyristors, insulated-gate bipolar transistors, IGBTs, or MOSFET transistors.

The AC grid or the AC source may provide an energy buffering function to the energy storage system to a low cost. With an energy buffering function, the energy rating and the Amper hour, Ah, rating may be seen as infinite. Hence, the energy may be buffered on the AC source instead of stored in the energy storage units. Using AC as the source for recharging the energy storage units may be advantageous in that it allows for conventional AC protection to be used. Further, when the energy storage units are provided with a recharge function, the complexity of the control of the energy storage system may be reduced compared to a system that uses a preloaded energy storage, which requires changing the energy storage units when depleted. The maintenance of the energy storage system is also reduced. The second AC/DC converter module allows for balancing power between the plurality of energy storage strings, such that the level of charge between the energy storage strings is balanced. This also allows for the energy storage system to contribute with an improved (preferably maximized) capacity utilization as there is a balance on the state of charge between each energy storage string. Balancing may further ensure that each energy storage string operates at an optimal state of charge, which may result in a better overall system performance. Energy storage strings in balance also allows for the energy storage system to scale up or down with less risk of disrupting the performance and stability of the energy storage system.

The second AC/DC converter module may be connected between the plurality of energy storage units and either one of the first terminal and the second terminal, by arranging the insulation of the energy storage units accordingly. The first terminal and the second terminal may alternatively (or interchangeably) be denoted as a first direct current, DC, pole and a second DC pole, respectively.

The energy storage system may have a monopolar DC side where the first terminal is a first direct current, DC, pole and the second terminal is a second DC pole. However, the energy storage system may also be a part of a bipolar DC side where the first terminal is a first DC pole, and the second terminal is connected to ground. The energy storage system may operate in either the side of the bipolar DC side with positive polarity, or the side with negative polarity, or there may be one energy storage system for each side such that both sides of the bipolar DC side are provided with a respective energy storage system.

The AC source may be an infeed from an external AC source. In some cases, the first converter may be connected to the AC grid through a grid transformer. In such case, the AC source may be an infeed from an extra winding of the grid transformer. As a further example, in a STATCOM station, there may be an auxiliary transformer that provides power to low voltage equipment that may be used as AC source.

The energy storage system may further comprise a control unit configured to control the first converter for following a power reference of the AC grid. The control unit may control how much power that is provided from the DC side and the energy storage system and to the AC grid. The power reference may include controlling the voltage and the frequency of the provided power such that it follows the reference values of the AC grid.

If the AC source is an infeed from said AC grid, the control unit may be further configured to control the first converter to compensate for the power flow between said plurality of energy storage strings and the AC source such that the first converter follows the power reference of the AC grid. The at least one second AC/DC converter module allows for power flow between the energy storage strings and the AC source. The first converter may be controlled by the control unit to compensate for the power flow, such that the output of the energy storage system as a whole may operate in synchronization with the frequency and voltage of the AC grid. By following the power reference of the AC grid, the energy storage system may provide to the AC grid stability by responding to changes in the frequency and voltage of the AC grid. The energy storage system can inject or absorb power as needed to regulate these parameters, preventing grid instability, voltage fluctuations, and frequency deviations.

The first converter may be a modular multi-level converter, MMC. Such configuration of the first converter may be suitable to provide the control coordination that allows the energy storage system to follow the power reference of the AC grid while allowing the power flow between the energy storage strings and the AC source. Due to the modularity of the MMC, it may further provide scalability to the energy storage system which follows the idea of balancing the energy storage strings for scaling of the energy storage system. As earlier discussed, power balance between the energy storage strings allows for easier scaling of the energy storage system. The MMC may be easily scaled by adding or removing converter cells. With these two features, the energy storage system may easily be scaled up or down depending on the requirements of the AC grid to which the energy storage system is installed.

The at least one second AC/DC converter module may be configured to handle a fraction of the power reference of the AC grid. In other words, the at least one second AC/DC converter module may be a fractional converter configured to change the voltage and/or frequency by a fraction. The fractional converter allows for a precise control of the voltage and the frequency.

An energy storage string may further comprise a DC/DC converter connected between the at least one second AC/DC converter module and the plurality of serially connected energy storage units of the energy storage string.

There may be one DC/DC converter connected between each energy storage string and the at least one second AC/DC converter module, such that there is an equal number of DC/DC converters as there are energy storage strings. The DC/DC converters allow control of the DC power to the energy storage strings such that it may be optimized for each energy storage string. Thus, the DC power provided to each separate energy storage string may be adapted to fit the state of charge and the requirements of each energy storage string. In some configurations, the DC/DC converters may be fractional converters and the second AC/DC converter module may be an ordinary AC/DC converter.

Each DC/DC converter may be connected to a common DC link. The at least one second AC/DC converter module may be one second AC/DC converter connected between the common DC link and the AC source. In other words, said at least one second AC/DC converter module may be a single AC/DC converter.

The common DC link is fed through the second AC/DC converter by the AC source and an DC/DC converter adjusts the voltage and current fed to the respective energy storage string, such that each energy storage string may be provided with an optimal power. As power flow is possible at the common DC link, cancellation of the common DC link is possible. This may allow the second AC/DC converter to be of a lower rating than the total rating of the DC/DC converters.

The at least one second AC/DC converter module may include a plurality of second AC/DC converters, wherein a second AC/DC converter may be connected to a respective energy storage string. In such configuration, the energy storage units of each energy storage string may be connected to the AC source through firstly a DC/DC converter and secondly a second AC/DC converter, such that the AC power is first transformed to DC power by the second AC/DC converter and then the DC power is adapted to the energy storage units of the energy storage string by the DC/DC converter.

The at least one second AC/DC converter module may be an insulated AC/DC converter having a plurality of ports, wherein each energy storage string may be connected to one respective port of the isolated AC/DC converter. This allows for each energy storage string to be connected to a single second AC/DC converter, which reduces the components of the energy storage system. The plurality of ports of the insulated AC/DC converter allows for flexibility in the design of the energy storage system and may provide further scalability to the energy storage system as additional energy storage strings may easily be added to the insulated AC/DC converter.

The energy storage system may further comprise an isolated DC/DC converter having a plurality of ports, wherein each energy storage string may be connected to one respective port of the isolated DC/DC converter. The at least one second AC/DC converter module may be an AC/DC converter connected to the isolated DC/DC converter. In other words, the at least one AC/DC converter module may be a single AC/DC converter connected between the isolated DC/DC converter and the AC source or the AC grid. The isolated DC/DC converter may allow the DC/DC converter to be utilized to provide the voltage needed for interfacing purposes. Further, the plurality of ports of the isolated DC/DC converter provides similar advantages as the plurality of ports of the isolated AC/DC converter, namely that the ports provide scalability to the energy storage system.

At least one transformer may be connected between the at least one second AC/DC converter module and the AC source.

The at least one second AC/DC converter module may include one second AC/DC converter for each energy storage string and said at least one transformer may include one transformer for each second AC/DC converter, wherein each transformer may be connected between the AC source and a respective second AC/DC converter. In other words, there may be a single second AC/DC converter for each energy storage string and a single transformer for each second AC/DC converter.

The transformers may provide electrical isolation between the AC source and the second AC/DC converter module such that the second AC/DC converter module may have a different reference potential. Further, the transformer offers galvanic isolation between the second AC/DC converter module and the AC source, which provides protection against faults and voltage fluctuations from one side of the transformer that may affect the other side.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular component parts of the device described may vary. It is also to be understood that the terminology used herein is for the purpose of describing particular embodiments only, and it is not intended to be limiting.

### Brief description of the drawings

The present disclosure will by way of example be described in more detail with reference to the appended drawings, which show example embodiments of the disclosure.
- Fig. 1: illustrates an energy storage system comprising a plurality of second AC/DC converters.
- Fig. 2: illustrates an energy storage system having both DC/DC converters and AC/DC converters.
- Fig. 3: illustrates an energy storage system with transformers.
- Fig. 4: illustrates an energy storage system with a common DC link.
- Fig. 5: illustrates an energy storage system having an insulated DC/DC converter with a plurality of ports.
- Fig. 6: illustrates an energy storage system having an insulated AC/DC converter with a plurality of ports.
- Fig. 7: illustrates a bipolar DC side of the first converter, wherein the bipolar DC side has two energy storage systems.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

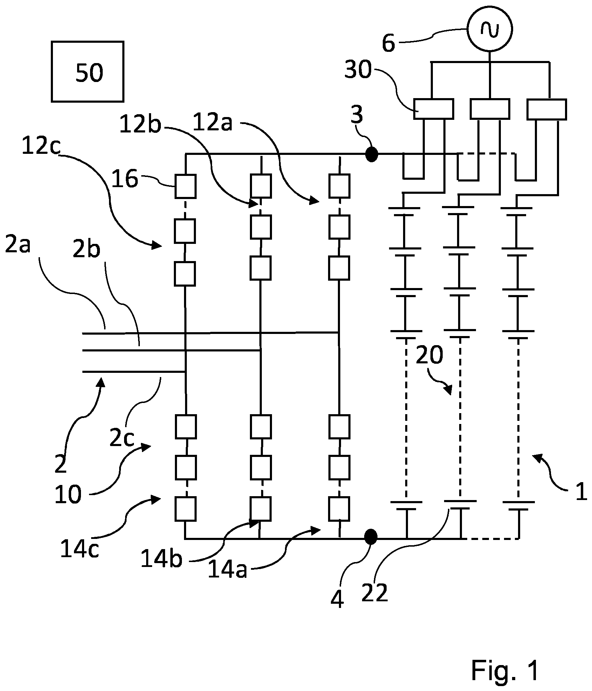

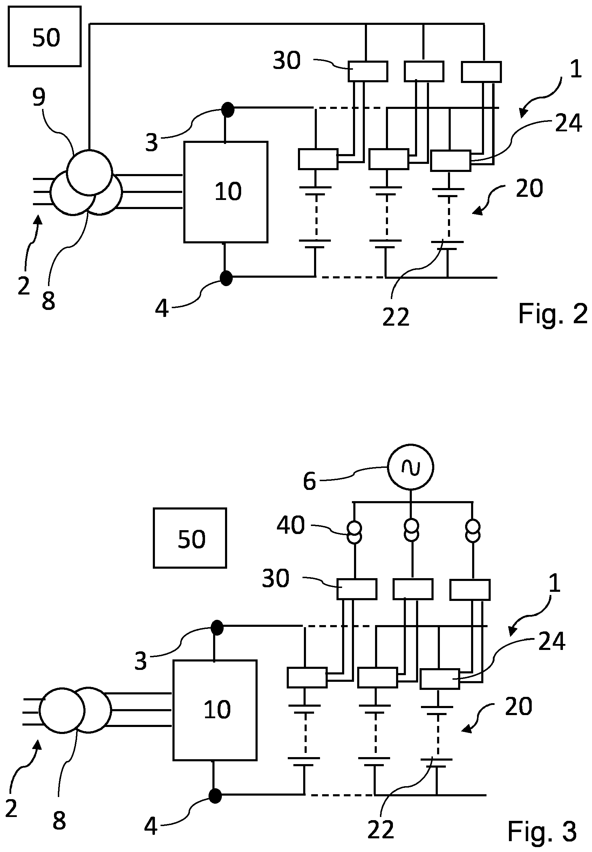

Fig.1 illustrates an energy storage system 1 connected to an alternating current, AC, grid 2. Three connection lines 2a-2c corresponding to the three phases of the AC grid 2 are connected to a first converter 10 of the energy storage system 1 at one side of the first converter 10. The other side of the first converter 10 is connected to a first terminal 3 and a second terminal 4 at a direct current, DC, side. Each of the connection lines 2a-2c for the three phases is connected to an upper arm 12a-12c and a lower arm 14a-14c of the converter 10. Each of the upper arms 12a-12c is connected to the first terminal 3 and each of the lower arms 14a-14c is connected to the second terminal 4. The first terminal 3 may be seen as a first DC pole and the second terminal 4 may be seen as a second DC pole. Each arm 12a-12c, 14a-14c comprises a plurality of converter cells 16. The plurality of converter cells 16 performs switching operations to convert an incoming power/voltage between AC and DC. The first converter 10 may for example be a modular multilevel converter. The first converters 10 in Figs. 2-7 represent a similar converter as described above. However, for the ease of understanding the figures, the converters are only represented with a box 10 in Figs. 2-7.

In Fig. 1, the energy storage system 1 further comprises a plurality of energy storage strings 20 connected in parallel to the first converter 10 and in parallel to each other between the first terminal 3 and the second terminal 4. Fig. 1 discloses three energy storage strings 20. However, as illustrated by the dotted lines, there may be a higher number of energy storage strings, that are not shown in Fig. 1. All the dotted lines in the figures represents that more components of the same type may be added in between. Hence, the dotted lines also illustrate that an energy storage string may include more energy storage units than what is represented in Fig. 1. Each of said plurality of energy storage strings 20 comprises a plurality of energy storage units 22 connected in series. By alternating the number of energy storage strings 20 connected in parallel and the number of energy storage units 22 connected in series, the energy storage system 1 may be designed with different voltage rating and current rating.

The energy storage strings 20 are connected to a second AC/DC converter module 30. The second AC/DC converter module 30 may comprise a plurality of second AC/DC converters, or different kind of AC/DC converter. In the following description the second AC/DC converter module 30 will be described for each figure by describing the different configurations of second AC/DC converters.

In Fig. 1, each of the energy storage strings 20 is connected in series to a respective second AC/DC converter 30. In other words, the second AC/DC converter module comprises one second AC/DC converter 30 for each energy storage string 20. The second AC/DC converter 30 may for example include diodes, thyristors, insulated-gate bipolar transistors, IGBTs, or MOSFET transistors. The second AC/DC converter 30 is configured to receive AC power from an AC source 6. In the example shown in Fig. 1, the AC source 6 may be an infeed from an external AC source 6. In other examples, the AC power may be provided to the second AC/DC converter from the AC grid.

The second AC/DC converters 30 that connect the energy storage strings 20 to the AC source 6 allow the energy storage units 22 to be recharged using energy from the AC source 6 (which is provided through the second AC/DC converter 30). Accordingly, it is not necessary to replace the energy storage units 22 when the stored energy have been provided to the AC grid 2. The AC source 6 provides an energy buffering function to the energy storage system 1 such that the energy rating and the Amper hour, Ah, rating may be seen as infinite. Hence, the energy is buffered on the AC source 6 instead of stored in the energy storage units.

The energy storage system may include a control unit 50 configured to control the power flow of the first converter 10, more specifically by controlling the converter cells 16. Thereby, the control unit 50 controls how much power that is provided from the energy storage system 1 to the AC grid 2. The control unit 50 is configured to control the first converter 10 such that a power reference of the AC grid 2 is followed. In other words, the first converter 10 may be controlled by the control unit 50 to compensate for the power flow, such that the output of the energy storage system 1 as a whole may operate in synchronization with the frequency and voltage of the AC grid 2. The second AC/DC converter 30 may be configured to handle a fraction of the power reference of the AC grid 2. In other words, the second AC/DC converter 30 may be a fractional converter configured to change the voltage and/or frequency by a fraction. The fractional converter allows for a precise control of the voltage and the frequency of the power provided to the AC grid 2.

Further, each AC/DC converter 30 may be controlled to balance the level of charge at the energy storage strings 20 such that the energy storage strings 20 are in balance with each other.

With reference to Fig. 2, further embodiments of the present inventive concept are described.

In Fig. 2, the first converter 10 is connected to a grid transformer 8 which may provide galvanic insulation between the energy storage system 1 and the AC grid 2. In Fig. 2, the energy storage strings 20 are provided with a respective DC/DC converter 24 which is connected between the second AC/DC converter 30 and the plurality of energy storage units 22. In other words, a DC/DC converter is connected between the first terminal 3 and the plurality of energy storage units 22 in each respective energy storage string 20, such that each energy storage string is provided with one respective DC/DC converter 24. The DC/DC converters 24 allow control of the DC power to the energy storage strings 20 such that it may be optimized for each energy storage string 20. Thus, the DC power provided to each separate energy storage string 20 may be adapted to fit the state of charge and the requirements of each energy storage string 20. In some configurations, the DC/DC converters 24 may be fractional converters and the second AC/DC converter 30 may be an ordinary AC/DC converter.

In Fig. 2, each of the second AC/DC converters 30 receives AC power from the AC grid 2 through an extra winding 9 of the grid transformer 8. The AC grid 2 acts therefore as an AC source or AC provided to the second AC/DC converters 30. In the present example, the AC source 6 may be considered as an infeed from the AC grid 2. The second AC/DC converters transform the AC power to DC power and transmit the DC power to the DC/DC converter 24, which adapts the DC power to the respective energy storage strings 20 of the DC/DC converter 24. As a further example, in a STATCOM station, there may be an auxiliary transformer that provides power to a low voltage equipment that may be used as an AC source.

When the AC source is the AC grid 2, the control unit 50 may configured to control the first converter 10 such that the first converter 10 compensates for the power flow between the AC source 6 and the energy storage strings 20 to follow a power reference of the AC grid 2.

In Fig. 3, the first converter 10 connects the DC side to the AC grid 2 through the grid transformer 8. Each of the energy storage strings 20, connected between the first terminal 3 and the second terminal 4, comprises a respective DC/DC converter 24 that is connected to a respective second AC/DC converter 30. However, in Fig. 3, there is a respective transformer 40 connected between each of the second AC/DC converters 30 and the AC source 6. The transformers 40 may provide electrical isolation between the AC source 6 and the second AC/DC converter 30 such that the second AC/DC converters 30 may have a different reference potential. Further, the transformers 40 offer galvanic isolation between the second AC/DC converters 30 and the AC source 6, which provides protection against faults and voltage fluctuations from one side of the transformer 40 that may affect the other side.

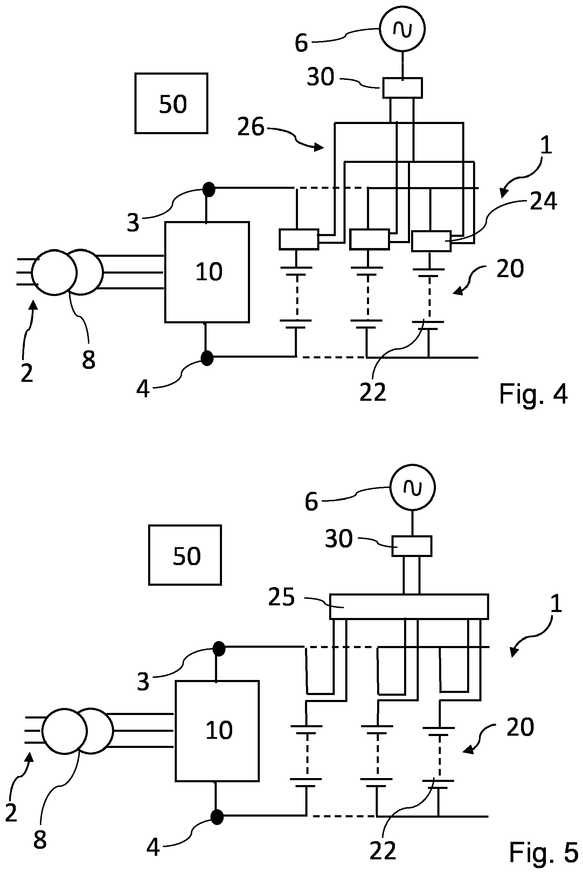

Turning to Fig. 4, another embodiment of the present inventive concept is described.

In Fig. 4, the energy storage system 1 is provided with a common DC link 26. Each DC/DC converter 24 is connected to the common DC link 26 such that only a single second AC/DC converter 30 is needed. The second AC/DC converter 30 is connected between the common DC link 26 and the AC source 6. As power flow is possible at the common DC link 26, cancellation of power flow in the common DC link 26 is possible, which may allow the second AC/DC converter 30 to be of a lower rating than the total rating of the DC/DC converters 24.

With reference to Fig. 5, another embodiment of the present disclosure is described.

In Fig. 5, the plurality of DC/DC converters 24 is replaced by an isolated DC/DC converter 25 having a plurality of ports. In other words, a multi-port DC/DC converter is used to replace the plurality of DC/DC converters 24. Each energy storage string 20 is connected to one respective port of the isolated DC/DC converter 25. With the isolated DC/DC converter 25, only a single second AC/DC converter 30 is then needed. The second AC/DC converter 30 is connected between the isolated DC/DC converter 25 and the AC source 6.

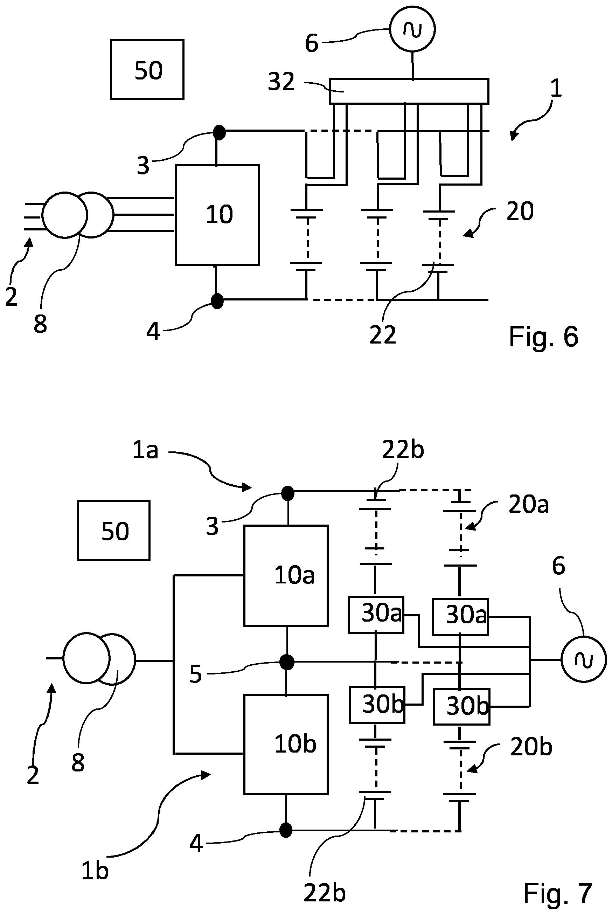

With reference to Fig. 6, yet another embodiment of the present disclosure is described.

In Fig. 6, the energy storage strings 20 are directly connected to a respective port of an insulated AC/DC converter 32. In other words, the energy storage system of the embodiment as depicted in Fig. 6 does not include any DC/DC converter. However, in some other embodiments, a DC/DC converter may be provided for each energy storage string 20. The insulated AC/DC converter 32 may also be denoted as a multi-port AC/DC converter. Utilizing an insulated AC/DC converter reduces the components needed in the energy storage system 1.

The energy storage system 1 in Fig. 1-6 may be seen as a monopolar DC side where the first terminal 3 is a first direct current, DC, pole and the second terminal 4 is a second DC pole. However, in Fig. 7, a bipolar DC side is illustrated. The bipolar DC side comprises a first terminal 3, representing a positive DC pole and a second terminal 4, representing a negative DC pole. A third terminal 5 is provided which represents ground. In other words, the bipolar DC side comprises a side with positive polarity and a side with negative polarity. The AC grid 2 is connected to two energy storage systems 1a, 1b through the transformer 8. A first one of the energy storage systems 1a is connected at the positive polarity, between the first terminal 3 and the third terminal 5, and a second one of the energy storage systems 1b is connected at the negative polarity, between the second terminal 4 and the third terminal 5. The transformer 8 provides AC power to a first converter 10a arranged at one side of the bipolar DC side and to another first converter 10b arranged at the other side of the bipolar DC side. Each energy storage system 1a, 1b comprises a plurality of energy storage strings 20a, 20b. The energy storage strings 20a of the first energy storage system 1a are connected in parallel to each other and in parallel to the first converter 10a. The energy storage strings 20b of the second energy storage system 1b are connected in parallel to each other and in parallel to the first converter 10b. Each of the energy storage strings 20a, 20b comprises a plurality of energy storage units 22a, 22b connected in series at each energy storage string 20a, 20b. Each energy storage string 20a, 20b is connected to a respective second AC/DC converter 30a, 30b which is connected to an AC source 6. The first and second energy storage systems 1a, 1b in Fig. 7 are two copies of the system in Fig. 1. Hence, any of the energy storage systems 1 described herein may be used at a bipolar DC side by connecting one at each polarity side. In some situations, only one of the polarity sides in the bipolar DC side may be equipped with an energy storage system 1.

It should be noted that in each of the figures, there may be components that may be added or altered. Using the AC grid 2 as the AC source, as illustrated in Fig. 2, is equally applicable to the embodiments described with reference to Fig. 1 and Figs. 3-7. Further, the transformers 40 presented in Fig. 3 may be used between the second AC/DC converter 30 and the AC source 5 in the embodiments described with reference to any of the figures. The transformer 40 may even be used when the AC source 6 is the AC grid 2.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. An energy storage system (1) for connection to an alternating current, AC, grid (2), the energy storage system comprising:
a first converter (10) configured to connect the AC grid to a first terminal (3) and a second terminal (4), wherein the first converter comprises an upper arm (12a-c) and a lower arm (14a-c) for each phase of the AC grid, wherein the upper arm is connected to the first terminal and the lower arm is connected to the second terminal and each arm comprises a plurality of converter cells (16),
a plurality of energy storage strings (20) connected in parallel to the first converter and in parallel to each other between the first terminal and the second terminal, wherein each of said plurality of energy storage strings comprises a plurality of energy storage units (22) connected in series with each other, and
at least one second AC/DC converter module (30) connected in series to said plurality of energy storage strings and configured to receive AC power from an AC source being an infeed from said AC grid or another AC source (6).

2. The energy storage system according to claim 1, further comprising a control unit (50) configured to control the first converter for following a power reference of the AC grid.

3. The energy storage system according to claim 2, wherein, if the AC source is an infeed from said AC grid, the control unit is further configured to control the first converter to compensate for the power flow between said plurality of energy storage strings and the AC source such that the first converter follows the power reference of the AC grid.

4. The energy storage system according to any one of the preceding claims, wherein the first converter is a modular multi-level converter, MMC.

5. The energy storage system according to any one of claims 2 to 4,
wherein said at least one second AC/DC converter module is configured to handle a fraction of the power reference of the AC grid.

6. The energy storage system according to any one of the preceding claims, wherein an energy storage string further comprises a DC/DC converter (24) connected between said at least one second AC/DC converter module and the plurality of serially connected energy storage units of the energy storage string.

7. The energy storage system according to claim 6, wherein each DC/DC converter is connected to a common DC link (26),
wherein said at least one second AC/DC converter module is one second AC/DC converter connected between the common DC link and the AC source.

8. The energy storage system according to any one of claims 1 to 6,
wherein said at least one second AC/DC converter module includes a plurality of second AC/DC converters, wherein a second AC/DC converter is connected to a respective energy storage string.

9. The energy storage system according to any one of claims 1 to 6,
wherein said at least one second AC/DC converter module is an insulated AC/DC converter (32) having a plurality of ports, wherein each energy storage string is connected to one respective port of the isolated AC/DC converter.

10. The energy storage system according to any one of claims 1 to 4, further comprising an isolated DC/DC converter (25) having a plurality of ports, wherein each energy storage string is connected to one respective port of the isolated DC/DC converter, and
wherein said at least one second AC/DC converter module is an AC/DC converter connected to the isolated DC/DC converter.

11. The energy storage system according to any one of the preceding claims, wherein at least one transformer (40) is connected between said at least one second AC/DC converter module and the AC source.

12. The energy storage system according to claim 11, wherein said at said at least one second AC/DC converter module includes one second AC/DC converter for each energy storage string and said at least one transformer includes one transformer for each second AC/DC converter, wherein each transformer is connected between the AC source and a respective second AC/DC converter.
